# EUROPÄISCHE PATENTSCHRIFT

(11) **EP 0 816 209 B1**
(45) Veröffentlichungstag und Bekanntmachung des Hinweises auf die Patenterteilung: **15.03.2000**
(21) Anmeldenummer: 97110692.7
(22) Anmeldetag: 01.07.1997
(51) Int. Cl.: B62D 43/04

(54) **Anordnung eines Reserverades an einem Kraftfahrzeug**
Arrangement of a spare wheel of a motor vehicle
Logement pour roue de secours d'un véhicule à moteur

(30) Priorität: 02.07.1996 DE 19626533
(43) Veröffentlichungstag der Anmeldung: 07.01.1998
(73) Patentinhaber: Bayerische Motoren Werke Aktiengesellschaft, 80788 München (DE)
(72) Erfinder: Hagner, Jörg, 85716 Unterschleissheim (DE); Gatz, Dieter, 80335 München (DE)

(56) Entgegenhaltungen:
- EP-A- 0 477 095
- DE-A- 2 045 630
- DE-A- 4 304 180
- DE-C- 4 323 621
- FR-A- 1 475 761
- US-A- 3 369 683

## Beschreibung

Die Erfindung betrifft eine Anordnung eines Reserverades an einem Kraftfahrzeug gemäß dem Oberbegriff des Anspruchs 1.

Aus der DE-A-20 45 630 ist bereits eine gattungsgemäße Anordnung eines Reserverades an einem Kraftfahrzeug bekannt. Ferner ist bei dieser bekannten Anordnung eine Abdeckung vorgesehen, in der das Reserverad gehalten wird, wobei die Abdeckung zwischen den beiden hinteren Fahrzeugrädern angeordnet ist. Die Abdeckung ist über zwei seitlich angeordnete vordere Träger am Fahrzeug angelenkt. Bei einem Zusammendrücken des Fahrzeughecks, beispielsweise durch einen Unfall, brechen die vorderen Träger und die Abdeckung, die das Reserverad trägt, wird nach vorne unterhalb eines geneigten Bodens eines Kraftstofftanks geschoben, ohne den Kraftstofftank zusammenzudrücken. Eine vom Inneren eines Kofferraumes oder Fahrgastraumes zugängliche, verriegelbare Befestigung ist am hinteren Ende zwischen der Abdeckung und dem Fahrzeug ausgebildet. Auch dieser Befestigungspunkt gibt unter der Wirkung einer größeren Kraft, wie sie bei einem heftigen Stoß auftritt, nach. Nachteilig bei dieser Anordnung des Reserverades ist es, daß die Abdeckung mit dem Reserverad nach dem Öffnen der verriegelbaren, hinteren Befestigung ohne Führung nach unten in Richtung einer Fahrbahn so verschwenkt, daß das Reserverad unter Kraftaufwand aus einer ungünstigen Lage unterhalb des Kofferraumes herausgezogen werden muß.

Aus der DE-C-43 23 621 ist bereits eine Halterung eines Reserverades in einem Korb oder einer Abdeckung bekannt, wobei die Abdeckung über Schwingen oder Haltearme unterhalb eines Bodens des Kraftfahrzeuges in Fahrtrichtung hinter einem Kraftstofftank befestigt ist. Die Abdeckung wird bei einem Stoß auf das Fahrzeugheck durch eine Schwenkbewegung der Schwingen nach unten unter den Kraftstofftank verschoben. An seinem heckseitigen Ende ist die Abdeckung mittels eines Seilzuges und einer im Kofferraum angebrachten Spannvorrichtung am Fahrzeugheck gehaltert, wobei der Seilzug durch eine Öffnung im Kofferraumboden zu der Abdeckung geführt ist und am unteren, heckseitigen Ende der Abdeckung in einem Anlenkpunkt angelenkt ist. Zur Entnahme des Reserverades aus der Abdeckung wird die Spannvorrichtung gelöst und die Abdeckung über den Seilzug abgesenkt. Die Abdeckung schwenkt schwerkraftbedingt um die an der Karosserie und an der Abdeckung ausgebildeten Anlenkpunkte des jeweiligen Haltearms unter einen Heckstoßfänger zum Ende eines Fahrzeughecks, bis die Anlenkpunkte an der Abdeckung entsprechend dem Kräftegleichgewicht mit den Seilkräften der Spannvorrichtung unter den Anlenkpunkten am Boden des Fahrzeugs zu liegen kommen. Zur Erleichterung der Reserveradentnahme können Mittel vorgesehen sein, durch die die Abdeckung weiter nach hinten verschwenkbar ist. Nachteilig bei dieser Reserveradhalterung ist, daß zur Entnahme des Reserverades der Seilzug der Spannvorrichtung von der Bedienungsperson unter Kraftaufwand so lange gehalten werden muß, bis sich die Abdeckung mit dem Reserverad in der Entnahmeposition befindet.

Aus der DE-A-26 21 922 ist bereits eine Anordnung eines Reserverades an einem Kraftfahrzeug bekannt, wobei das Reserverad unter dem Kofferraumboden am Heck des Kraftfahrzeuges befestigt ist. Das Reserverad liegt in einem offenen Korb. Der Korb ist an seinem dem Fahrzeugende zugewandten Ende über eine Verriegelungseinrichtung am Fahrzeugboden angehängt. Das dazu gegenüberliegende vordere Ende des Korbes ist um eine Querachse am unteren Ende zweier Schwingen schwenkbar gelagert. Die Schwingen sind ihrerseits mit ihrem oberen Ende an einer gemeinsamen Querachse gelagert, die relativ zur unteren Querachse zur Fahrzeugmitte hin versetzt ist. Aufgrund dieser Anordnung ist der Korb und damit das darin liegende Reserverad in Fahrtrichtung nach vorne hin schräg nach unten geneigt. Die Schwingen sind an ihrem oberen Ende jeweils zusätzlich zu der Drehachse mit einer Niete befestigt, wobei diese Nieten unter einer vorbestimmten Kraft abscheren. Wirkt auf das Fahrzeug ein kräftiger Stoß auf das Heck ein und werden die den Kofferraum begrenzenden Bleche zusammengedrückt, dann wird das Reserverad nach vorne geschoben und die Schwingen werden aufgrund ihrer Ausrichtung nach dem Abscheren der Nieten um die Drehachse nach unten und nach vome verschwenkt. Bei einem voll eingedrückten Fahrzeugheck kommt das Reserverad unter einem vor der Hinterachse angeordneten Fahrzeugtank zum Liegen. Nachteilig bei dieser bekannten Anordnung ist, daß das Reserverad ungeschützt ist, wodurch es zu einer Verschmutzung und einer Beschädigung des Reserverades kommen kann.

Aufgabe der Erfindung ist es, eine Anordnung eines Reserverades an einem Kraftfahrzeug zu schaffen, durch die eine Beschädigung der Hinterachse bei einer Krafteinwirkung auf das Fahrzeugheck vermieden ist und bei der gleichzeitig das Reserverad vor Verschmutzung oder Beschädigung geschützt ist.

Diese Aufgabe wird durch die Merkmale des Anspruchs 1 gelöst.

Bei der erfindungsgemäßen Anordnung befindet sich das Reserverad in einer zur Straße hin geschlossenen Abdeckung. Dadurch ist das Reserverad vor einer Beschädigung und vor Verschmutzung geschützt. Die erfindungsgemäße Abdeckung ist so angeordnet und gestaltet, daß die Aerodynamik am Fahrzeugboden verbessert ist. Neben dem Reserverad kann in der erfindungsgemäßen Abdeckung ein zusätzlicher Stauraum ausgebildet sein.

Die Abdeckung ist an ihrem vorderen Ende nach unten geneigt und so gegenüber einer schrägen Abgleitfläche angeordnet, daß bei einer entsprechend hohen Krafteinwirkung auf das Fahrzeugheck und einer dadurch bewirkten Loslösung der Abdeckung aus ihrer Befestigung das Reserverad mit der Abdeckung an der Abgleitfläche nach vorne und nach unten gleitet. Dadurch wird eine Beschädigung der Hinterachse bei einer auf das Fahrzeugheck einwirkenden Kraft vermieden, wodurch auch die Reparaturkosten niedriger sind.

In einer vorteilhaften Ausführungsform ist am vorderen Ende der Abdeckung mindestens ein nach hinten offener hakenförmiger Halter angeformt, der unterhalb der Abgleitfläche an einer dafür vorgesehenen Drehachse eingehängt ist. Ferner ist an der Abdeckung mindestens eine nach vorne ausgerichtete Sicherungslasche vorgesehen, die in Höhe der Hinterachse mit ihrem vorderen Ende beispielsweise in eine in der Abgleitfläche ausgebildeten Öffnung eingreift. Die Sicherungslasche ist so ausgelegt, daß die Sicherungslasche ab einer vorbestimmten, auf das Fahrzeugheck einwirkenden Kraft abschert oder aus der Öffnung gelangt. Damit wird die Sicherung der Abdeckung mit dem Reserverad in bezug auf die Karosserie aufgehoben und die Abdeckung kann mit dem Reserverad an der Abgleitfläche nach vorne und unten gleiten.

Die Außenwände der erfindungsgemäßen Abdeckung verlaufen in der Draufsicht im wesentlichen U-förmig. Das hintere Ende der Abdeckung ist in einer Ausführungsform offen ausgebildet. In einer weiteren vorteilhaften Ausführungsform sind am hinteren Ende der Abdeckung zusätzliche Wände angeformt, die mit den Außenwänden Hohlräume bzw. Stauräume bilden.

In einer vorteilhaften Ausführungsform erfolgt die Befestigung der Abdeckung mit dem darin befindlichen Reserverad dadurch, daß an der Abdeckung ein Bolzen in Höhe der Radmitte angeordnet ist, der durch eine in der Radfelge ausgebildete Öffnung hindurchgeht und mit seinem oberen Ende in ein am Fahrzeugboden ausgebildetes Schloß einrastet. Das Schloß weist eine in ihrem Durchmesser veränderbare Feder auf, die beim Eindringen des oberen Endes des Bolzens radial nach außen bewegt wird und danach in einer Verriegelungsstellung hinter dem Bolzenende einrastet. Diese Feder ist beispielsweise über einen Seilzug vom Fahrzeuginnenraum oder von einer geeigneten Stelle in oder am Kofferraum über ein Betätigungselement entriegelbar. Dies hat den Vorteil, daß das Reserverad auch bei einem vollen Gepäckraum und ohne Werkzeug entriegelbar ist. Vorteilhafterweise ist in dem Entriegelungsmechanismus eine Sperrstellung vorgesehen, durch die der Fahrzeugbenutzer gezwungen ist, die Reserveradabdeckung wieder in den verriegelten Zustand zu bringen. Eine vorteilhafte Möglichkeit besteht darin, daß das Betätigungselement nach dem Entriegelungsvorgang das Schließen der Heckklappe verhindert bzw. daß das Schließen der Heckklappe erfordert, daß die Reserveradabdeckung verriegelt ist.

In einer weiteren vorteilhaften Ausführungsform ist die Reserveradabdeckung in mindestens einer Kulisse geführt. Nach dem Lösen der Reserveradabdeckung aus der Befestigung klappt die Abdeckung mit dem Reserverad mit ihrem hinteren Ende nach unten und rutscht dann entsprechend der Kulissenbahn in Richtung des heckseitigen Endes des Kraftfahrzeuges. Die Kulissenführung ist so gestaltet, daß das Reserverad dann entnommen werden kann. Bei einer entsprechenden Ausbildung der Kulissenkurve kann die Abdeckung mit dem Reserverad unter Ausnutzung des Eigengewichtes ohne großen Kraftaufwand in die Ausgangsposition zurückgeführt werden.

Ausführungsformen der Erfindung werden nachstehend anhand der Zeichnungen beispielshalber beschrieben. Dabei zeigen:
- Figur 1: eine Schnittansicht von der Seite einer Anordnung eines Reserverades unter dem Boden eines Kofferraumes, wobei der Kofferraum nur teilweise dargestellt ist,
- Figur 2: eine Ansicht von oben auf eine Verriegelungsfeder,
- Figur 3: eine Teilansicht von der Seite auf einen Entriegelungshebel in einer Öffnungs- und in einer Schließstellung,
- Figur 4: eine perspektivische Ansicht einer Abdeckung,
- Figuren 5 und 6: perspektivische Ansichten jeweils eine Stauraumes für die Abdeckung der Figur 4,
- Figur 7: eine Schnittansicht von der Seite einer durch Kulissen geführten Abdeckung, wobei die Figur 7 sowohl die eingehängte Lage als auch die ausgehängte Lage der Abdeckung zeigt,
- Figur 8: eine teilweise geschnittene Ansicht von oben, aus der die Abdeckung vor einer Hinterachse eines Kraftfahrzeuges ersichtlich ist, und
- Figur 9: eine Schnittdarstellung eines Bauteils, bei dem in einer Kulissenkurve ein Kulissenzapfen geführt ist.

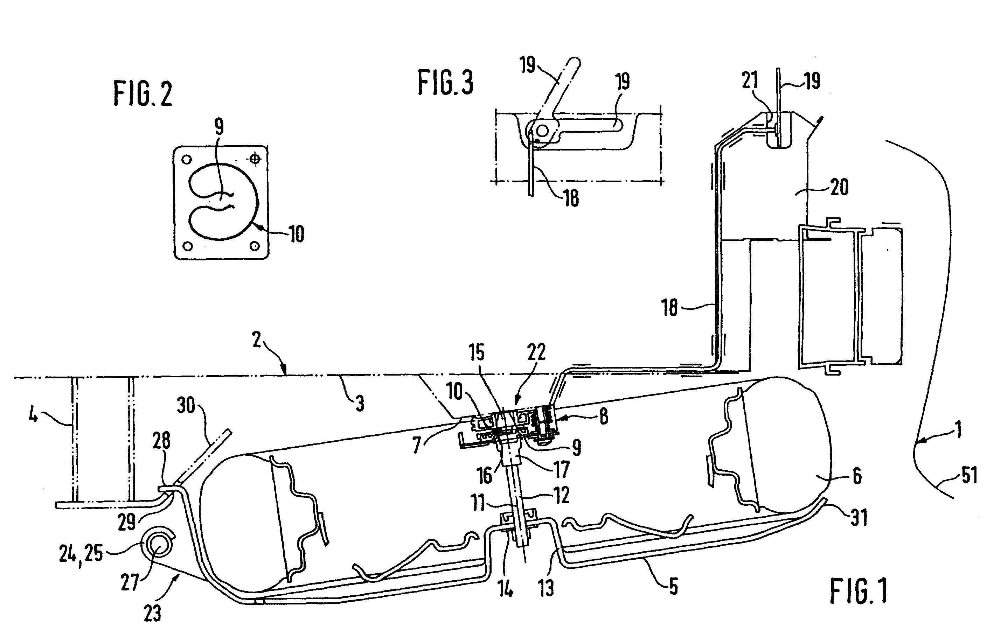

Die Figur 1 zeigt einen unteren, hinteren Bereich eines Kofferraumes 2 eines Kraftfahrzeuges 1. Am Boden 3 des Kofferraumes 2 ist vor einer Hinterachse 4 eine Abdeckung 5 mit einem darin gehalterten Reserverad 6 befestigt. Zu diesem Zweck ist in Richtung zur Fahrbahn eine vorstehende, zur Hinterachse 4 nach unten geneigte Fläche 7 am Kofferraumboden 3 ausgebildet. An der schrägen Fläche 7 ist ein Schloß 8 mit einer zur Fahrbahn hin zeigenden Öffnung 9 angeordnet. Ein Teil der Öffnung 9 wird durch eine in radialer Richtung verstellbare Feder 10 begrenzt. In der Abdeckung 5 ist in Höhe der Radmitte 11 ein Bolzen 12 befestigt. In der in der Figur 1 gezeigten Ausführungsform ist zur Lagefixierung des Reserverades 6 eine ringförmige Erhebung 13 in der Abdeckung 5 ausgebildet, in der das untere Ende 14 des Bolzens 12 befestigt ist. Am oberen Ende 15 des Bolzens 12 ist eine konische Spitze angeformt, an die sich eine Querschnittsverengung 16 anschließt. Unterhalb der Querschnittsverengung 16 ist ein Anschlag 17 mit einem größeren Durchmesser ausgebildet. Die Breite und Tiefe der Querschnittsverengung 16 ist so bemessen, daß die Feder 10 beim Verriegelungsvorgang in der Querschnittsverengung 16 einrastet. An der Feder 10 ist ein Seilzug 18 so angeordnet, daß über ein als Hebel ausgebildetes Betätigungselement 19 der Durchmesser der Feder 10 im Bereich der Querschnittsverengung 16 des Bolzens 12 so vergrößert bzw. auseinandergezogen werden kann, daß das obere Ende 15 des Bolzens 12 aus der Verriegelungsposition freigegeben wird und das Reserverad 6 mit der Abdeckung 5 nach unten in Richtung zur Fahrbahn fällt und sich dabei um eine vordere Drehachse 27 dreht. Der Seilzug 18 ist in der Figur 1 gezeigten Ausführungsform bis zu einer in einer Abschlußwand 20 ausgebildeten Griffmulde 21 geführt, in der der Hebel 19 schwenkbar gelagert ist.

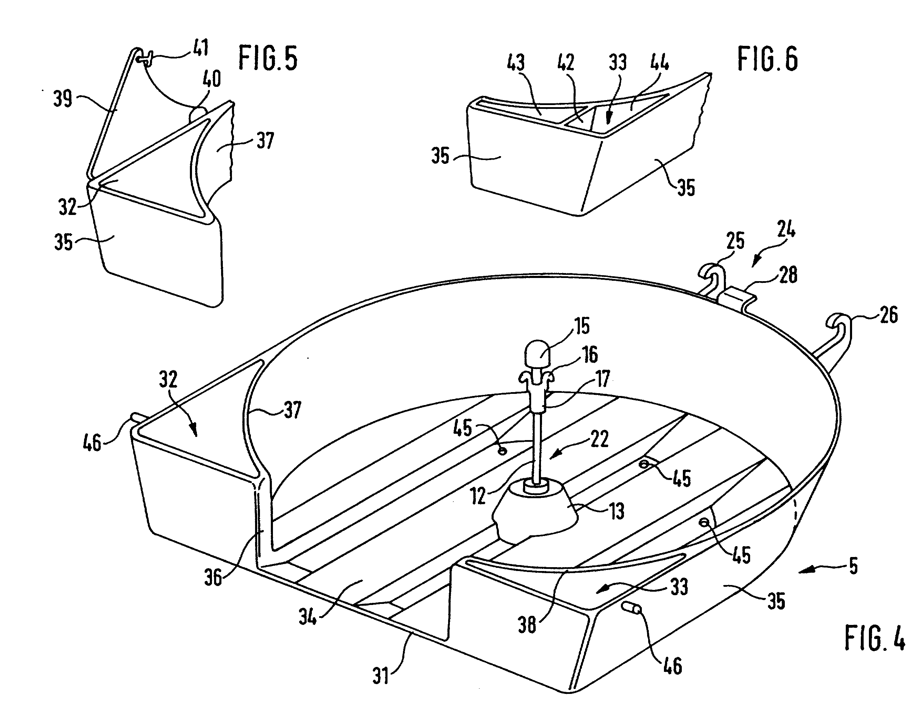

Zusätzlich zu der oben beschriebenen ersten Befestigung 22 ist die Abdeckung 5 an ihrem vorderen Ende 23 über eine zweite Befestigung 24 an der Karosserie des Kraftfahrzeuges gehaltert. Die zweite Befestigung 24 besteht in der in den Figuren 1 und 4 gezeigten Ausführungsform aus zwei seitlich voneinander beabstandeten Haken 25, 26, die nach hinten hin offen sind und die jeweils eine Bolzen oder eine als Schwenkachse dienende Stange 27 umgreifen. Wird die erste Befestigung 22 gelöst, schwenkt die Abdeckung 5 mit dem Reserverad 6 um die Schwenkachse 27 nach unten in Richtung zur Fahrbahn. In Richtung zur Hinterachse 4 ist eine Sicherungslasche 28 vorgesehen, die in eine Öffnung oder Aussparung 29 einer Abgleitfläche 30 eingreift. Die Länge und Schräge der Abgleitfläche 30 ist in Zusammenwirkung mit der Neigung der Abdeckung 5 und des darin gehalterten Reserverades 6 so ausgelegt, daß bei einer Verschiebung der Abdeckung 5 mit dem Reserverad 6 bei einem Heckaufprall oder dergleichen das Reserverad 6 an der Abgleitfläche 30 nach unten rutscht, so daß die Hinterachse 4 durch die Verschiebung des Reserverades 6 nicht beschädigt wird. Gleichzeitig ist die durch die Sicherungslasche 28 übertragbare Kraft so bemessen, daß die Sicherungslasche 28 ab einer vorbestimmten Kraft abschert oder sich aus der Öffnung 29 herausbewegt. Darüber hinaus ist das Schloß 8 einschließlich der Feder 10 in der oben beschriebenen Verschieberichtung offen, so daß sich die erste Befestigung 22 ab einer vorbestimmten Kraft aus der Verriegelungsstellung bewegt. Die Figur 2 zeigt eine Ausführungsform einer in Verschieberichtung offenen Feder 10.

Die Figur 3 zeigt den Entriegelungshebel bzw. das Betätigungselement 19 zum einen in einer waagrechten Stellung, in der die Abdeckung 5 über das Schloß 8 am Kofferraum-Boden 3 befestigt ist und zum anderen in einer nach oben verschwenkten Position, in der die Abdeckung 5 aus der Verriegelung mit dem Kofferraum-Boden 3 gelöst ist. Solange der Entriegelungshebel 19 nach oben steht, kann die Heckklappe nicht geschlossen werden. Somit ist ein Schließen der Heckklappe nur möglich, wenn die Reserveradabdeckung 5 verriegelt ist, weil dann der Entriegelungshebel 19 wieder waagrecht liegt.

In der Figur 4 ist eine Ausführungsform einer Abdeckung 5 gezeigt, an deren hinteren Ende 31 der nicht für das Reserverad 6 benötigte Raum als Stauraum 32 und 33 genutzt ist. Wie aus der Figur 4 hervorgeht, besteht die Abdeckung 5 aus einem Boden 34 und einer umlaufenden Seitenwand 35, die in der in der Figur 4 gezeigten Ausführungsform am hinteren Ende 31 eine Aussparung 36 zur leichteren Handhabung aufweist. Die Abdeckung 5 ist im wesentlichen U-förmig ausgebildet. Zur Bildung der Stauräume 32 und 33 weist die Seitenwand 35 im Bereich des hinteren Endes 31 zusätzliche, kreisförmige Wandabschnitte 37, 38 auf, deren Radius dem Durchmesser des Reserverades 6 angepaßt sind.

In der Figur 5 ist der Stauraum 32 mit einem Deckel 39 versehen, der beispielsweise um eine Schwenkachse 40 an der Seitenwand 35 angeordnet ist. Der Deckel 39 ist mit einer Verriegelungseinrichtung 41 versehen, die beispielsweise aus einem drehbaren Haken besteht, der durch ein entsprechendes an der Seitenwand 35 ausgebildetes Gegenstück verriegelbar ist. Der Stauraum 33 der Figur 6 ist durch eine Zwischenwand 42 in zwei Teilfächer 43, 44 unterteilt. Am Boden 34 sind ferner Ablauflöcher 45 ausgebildet, durch die sich das in der Abdeckung 5 ansammelnde Wasser abfließen kann. An den hinteren, seitlichen Außenwänden 35 ist jeweils auf beiden Seiten ein vorstehender Bolzen oder Zapfen 46 ausgebildet. Beim Lösen der ersten Befestigung 22 fällt die Abdeckung 5 mit dem Reserverad 6 mit ihrem hinteren Ende 31 nach unten. Nach einer vorbestimmten Wegstrecke werden die Zapfen 46 durch an der Karosserie ausgebildete Anschläge aufgefangen.

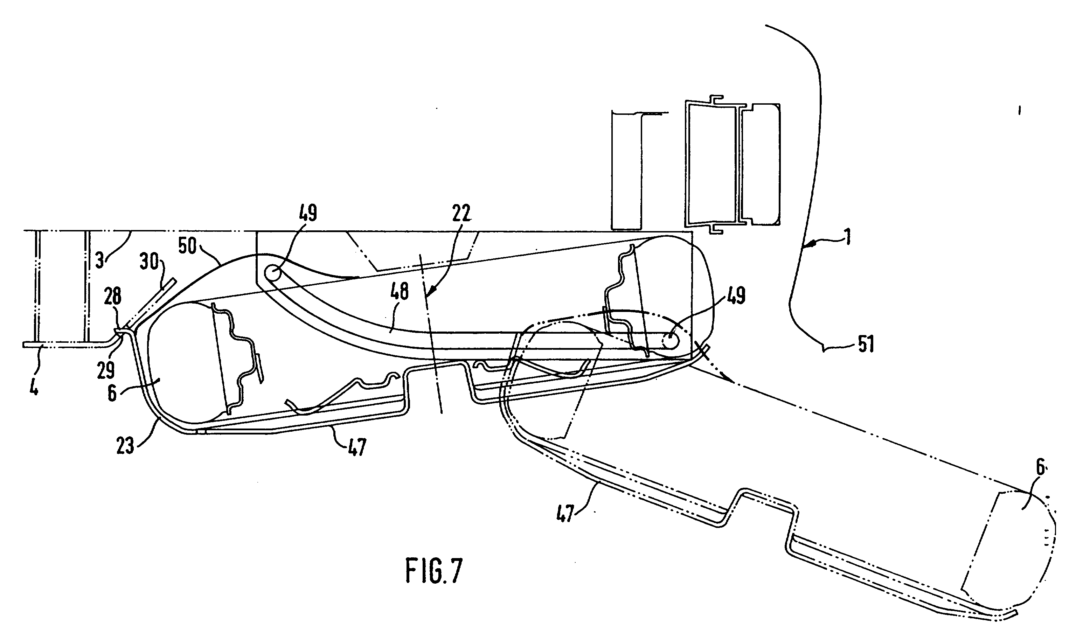

Die Figur 7 zeigt eine Ausführungsform einer Abdeckung 47, die neben der ersten Befestigung 22 über in Kulissenkurven 48 geführte Kulissenzapfen 49 gehaltert ist. Der Kulissenzapfen 49 ist so in der Kulissenkurve 48 gehaltert, daß der Kulissenzapfen 49 bei einer entsprechend hohen Krafteinwirkung in Richtung der Abgleitfläche 30 aus der Kulissenkurve 48 rutscht. Die Kulissenzapfen 49 sind am vorderen Ende 23 der Abdeckung 47 rechts und links an den Seitenwänden 35 ausgebildet. Zu diesem Zweck können die Seitenwände 35 jeweils eine sich in Richtung des Kofferraumbodens 3 erstreckende Erhebung 50 aufweisen. In der Figur 7 ist in durchgezogenen Linien die verriegelte Position der Abdeckung 47 mit dem Reserverad 6 dargestellt. Zusätzlich zeigt die Figur 7 in strichpunktierten Linien die Entnahmeposition für das Reserverad 6. Die Abdeckung 47 wird zur Entnahme aus der Verriegelungsstellung der ersten Befestigung 22 gelöst. Die Abdeckung 47 fällt mit dem Reserverad 6 nach unten und wird durch die beidseitig ausgebildeten Zapfen 46 in einer vom Kofferraumboden 3 beabstandeten Lage aufgefangen. Anschließend muß der Benutzer das Reserverad 6 mit der Abdeckung 47 nach hinten und nach außen ziehen. Dabei rutscht die Abdeckung 47 mit dem Reserverad 6 entlang der jeweiligen Kulissenkurve 48 nach unten und nach hinten, bis die Kulissenzapfen 49 zu Anschlägen an den Enden der Kulissenkurven 48 gelangen. In dieser Lage ragt das Reserverad 6 und die Abdeckung 47 beispielsweise zur Hälfte über die Fahrzeugbegrenzung 51 hinaus. Das Reserverad 6 kann nun entnommen werden.

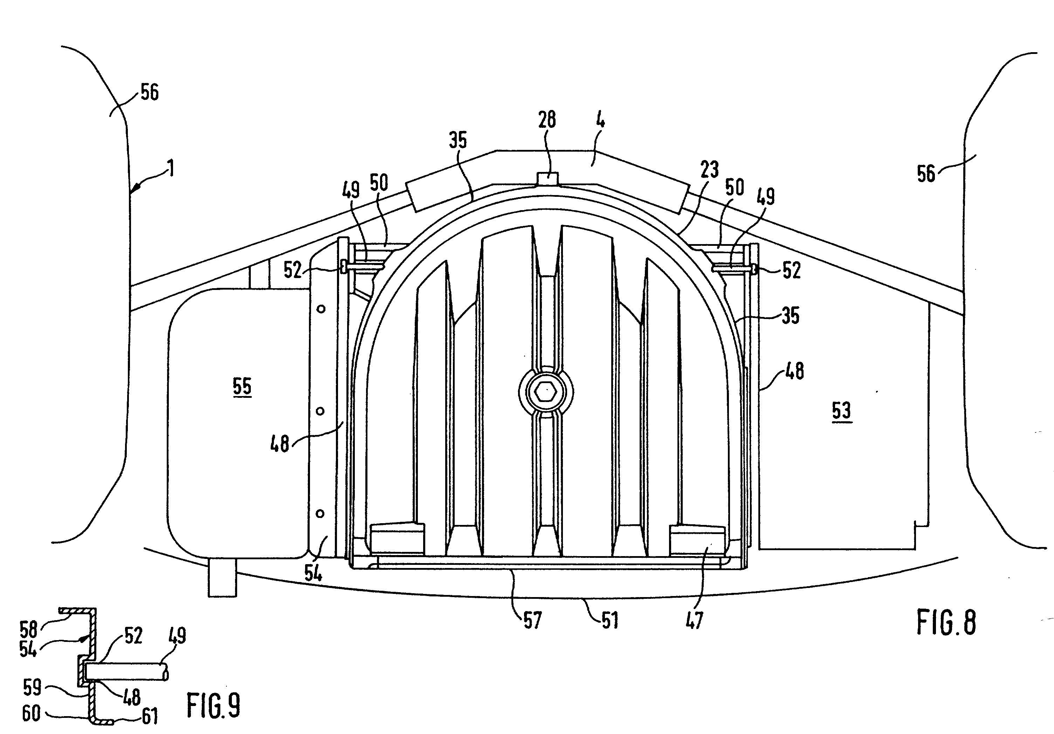

Die Figur 8 zeigt die Lage der Abdeckung 47 vor der Hinterachse 4. In der Figur 8 ist das Abgleitblech bzw. die Abgleitfläche 30 zur übersichtlicheren Darstellung weggelassen. Am vorderen Ende 23 der Abdeckung 47 sind die links und rechts an den Seitenwänden 35 ausgebildeten Erhebungen oder Ansätze 50 erkennbar, in denen die Kulissenzapfen 49 angeordnet sind. Die äußeren Enden 52 der Kulissenzapfen 49 befinden sich in den Kulissenkurven 48. Die rechte Kulissenkurve 48 ist in der in der Figur 8 gezeigten Ausführungsform beispielsweise in der Außenwand eines Ablagekastens 53 ausgebildet. Die linke Kulissenkurve 48 ist in einem separaten Bauteil 54 ausgeformt. Da neben dem Bauteil 54 eine Abgasanlage 55 verläuft, ist das Bauteil 54 aus einem hitzebeständigen Material, beispielsweise aus Metall hergestellt. Der Ablagekasten 53 kann hingegen aus Kunststoff oder dergleichen bestehen. Aus der Figur 8 geht ferner hervor, daß die Abdeckung 47 weitestgehend zwischen den Fahrzeugrädem 56 liegt. Bei einem Lösen der Abdeckung 47 infolge einer auf das Fahrzeugheck wirkenden Kraft, beispielsweise bei einem Heck-Crash, wird durch die beiden Fahrzeugräder 56 sichergestellt, daß die Abdeckung 47 mit dem Reserverad 6 unterhalb dem Boden 3 des Fahrzeuges 1 bleibt. Zusätzlich ist die Abdeckung 47 durch mindestens ein Fangseil oder eine Fangstange mit der Karosserie des Kraftfahrzeuges verbunden. Die untere, hintere Kante 57 der Abdeckung 47 ist aerodynamisch an die Fahrzeugbegrenzung 51, beispielsweise eine Stoßfängerverkleidung, angepaßt.

Die Figur 9 zeigt eine Schnittdarstellung des linken Bauteils 54, in der das äußere Ende 52 des Kulissenzapfens 49 in der Kulissenkurve 48 geführt ist. Das Bauteil 54 besteht im wesentlichen aus einem L-förmigen Blech, wobei der kurze Abschnitt 58 des Bauteils 54 zur Befestigung dient und wobei in dem langen Abschnitt 59 die Kulissenkurve 48 ausgebildet ist. Am unteren Ende 60 des langen Abschnitts 59 des Bauteils 54 ist ein waagrechter Abschnitt 61 ausgebildet, der als Fangnase oder Anschlag für den Zapfen 46 dient. Ein entsprechender Anschlag ist ebenfalls an der Wand ausgebildet, in der sich die rechte Kulissenkurve 48 befindet.

## Patentansprüche

1. Anordnung eines Reserverades (6) an einem Kraftfahrzeug (1), unterhalb eines Kofferraumbodens (3), mit einer Einrichtung (5), in der das Reserverad (6) gehaltert ist, wobei die Einrichtung (5) nach vorne schräg nach unten geneigt ist, wobei die Einrichtung (5) über mindestens zwei Befestigungen (22; 24) an der Karosserie des Kraftfahrzeuges (1) so befestigt ist, daß sich die Einrichtung (5) ab einer vorbestimmten, auf ein Fahrzeugheck (51)wirkenden Kraft aus den Befestigungen (22; 24) löst und sich nach unten und nach vorne in einen freien Raum zwischen einem Fahrzeugboden (3) und einer Fahrbahn bewegt, wobei die Einrichtung (5) zur Aufnahme des Reserverades (6) eine zur Fahrbahn hin geschlossene und zum Fahrzeugboden (3) hin offene, schalenförmige Abdeckung (5) ist, wobei gegenüber einem schräg nach unten geneigten, vorderen Ende (23) der Abdeckung (5) eine Abgleitfläche (30) an der Karosserie des Kraftfahrzeuges (1) ausgebildet ist, entlang der das vordere Ende (23) der Abdeckung (5) nach einer Lösung der Befestigung (22, 24) aufgrund einer entsprechend hohen Krafteinwirkung in Richtung der Abgleitfläche (30) nach unten abgleitet, dadurch gekennzeichnet,
daß die eine Befestigung (22) der Abdeckung (5, 47) über ein Schloß (8) mit einer Feder (10) erfolgt, wobei in eine durch die Feder (10) gebildete Öffnung (9) ein oberes Ende (15) eines an der Abdeckung (5, 47) befestigten Bolzens (12) einrastet, daß die Öffnung (9) der Feder (10) über einen Seilzug oder dergleichen (18) und ein Betätigungselement (19) zur Freigabe des Bolzens (12) vergrößerbar ist,
daß mindestens eine Sicherungslasche (28) in entgegengesetzter Richtung in eine in der Karosserie (30) ausgebildeten Öffnung (29) eingreift und somit die Abdeckung (5) zusätzlich gegen ein Verrutschen nach vorne sichert,
daß eine weitere Befestigung über mindestens eine Kulissenkurve (48) erfolgt, die an der Karosserie (53, 54) des Kraftfahrzeuges (1) befestigt ist, wobei in der jeweiligen Kulissenkurve (48) ein Kulissenzapfen (49) geführt ist, daß sich die Abdeckung (47) bei einem Entriegeln aus der Befestigung (22) zunächst nach unten bis zu einem Anschlag (46, 61) um den obersten Punkt der Kulissenkurve (48) dreht und daß die Abdeckung (47) anschließend mit dem Reserverad (6) entlang der Kulissenkurve (48) nach hinten über die Fahrzeugbegrenzung (51) hinaus herausziehbar ist.

2. Anordnung eines Reserverades nach Anspruch 1, dadurch gekennzeichnet, daß der Kulissenzapfen (49) so in der Kulissenkurve (48) gehaltert ist, daß der Kulissenzapfen (49) bei einer entsprechend hohen Krafteinwirkung in Richtung der Abgleitfläche (30) aus der Kulissenkurve (48) rutscht.

3. Anordnung eines Reserverades (6) an einem Kraftfahrzeug (1), unterhalb eines Kofferraumbodens (3), mit einer Einrichtung (5), in der das Reserverad (6) gehaltert ist, wobei die Einrichtung (5) nach vorne schräg nach unten geneigt ist, wobei die Einrichtung (5) über mindestens zwei Befestigungen (22; 24) an der Karosserie des Kraftfahrzeuges (1) so befestigt ist, daß sich die Einrichtung (5) ab einer vorbestimmten, auf ein Fahrzeugheck (51)wirkenden Kraft aus den Befestigungen (22; 24) löst und sich nach unten und nach vorne in einen freien Raum zwischen einem Fahrzeugboden (3) und einer Fahrbahn bewegt, wobei die Einrichtung (5) zur Aufnahme des Reserverades (6) eine zur Fahrbahn hin geschlossene und zum Fahrzeugboden (3) hin offene, schalenförmige Abdeckung (5) ist, wobei gegenüber einem schräg nach unten geneigten, vorderen Ende (23) der Abdeckung (5) eine Abgleitfläche (30) an der Karosserie des Kraftfahrzeuges (1) ausgebildet ist, entlang der das vordere Ende (23) der Abdeckung (5) nach einer Lösung der Befestigung (22, 24) aufgrund einer entsprechend hohen Krafteinwirkung in Richtung der Abgleitfläche (30) nach unten abgleitet, dadurch gekennzeichnet,
daß die eine Befestigung (22) der Abdeckung (5, 47) über ein Schloß (8) mit einer Feder (10) erfolgt, wobei in eine durch die Feder (10) gebildete Öffnung (9) ein oberes Ende (15) eines an der Abdeckung (5, 47) befestigten Bolzens (12) einrastet, daß die Öffnung (9) der Feder (10) über einen Seilzug oder dergleichen (18) und ein Betätigungselement (19) zur Freigabe des Bolzens (12) vergrößerbar ist,
daß mindestens eine Sicherungslasche (28) in entgegengesetzter Richtung in eine in der Karosserie (30) ausgebildeten Öffnung (29) eingreift und somit die Abdeckung (5) zusätzlich gegen ein Verrutschen nach vorne sichert,
daß die andere Befestigung (24) aus mindestens einem an der Abdeckung (5) ausgebildeten Haken (25, 26) besteht, der an einer an der Karosserie des Fahrzeuges angeordneten Schwenkachse (27) eingehängt ist, wobei der Haken (25, 26) zum Fahrzeugheck (51) hin offen ist.

4. Anordnung eines Reserverades nach einem der vorhergehenden Ansprüche, dadurch gekennzeichnet, daß die Abdeckung (5, 47) neben dem Raum für das Reserverad (6) zusätzlichen Stauraum (32, 33) aufweist.

5. Anordnung eines Reserverades nach einem der vorhergehenden Ansprüche, dadurch gekennzeichnet, daß die Abdeckung (5, 47) dem Fahrzeugboden aerodynamisch angepaßt hinter einer Hinterachse (4) und vor einer Fahrzeugbegrenzung (51) angeordnet ist.

6. Anordnung eines Reserverades nach einem der vorhergehenden Ansprüche, dadurch gekennzeichnet, daß die Abdeckung (5, 47) zwischen den beiden hinteren Fahrzeugrädern (56) angeordnet ist.

## Claims

1. An arrangement of a spare wheel (6) on a motor vehicle (1) underneath the bottom (3) of a luggage boot, comprising a device (5) in which the spare wheel (6) is held, the device (5) being inclined obliquely forward and downward, the device (5) being attached by at least two fastenings (22; 24) to the body of the vehicle (1) so that when the force exerted on the rear (51) of the vehicle exceeds a certain value the device (5) comes loose from the fastenings (22; 24) and moves downwards and forwards into a free space between a vehicle bottom (3) and a road, wherein the device (5) has a dish-shaped cover (5) closed towards the road and open towards the vehicle bottom (3) for holding the spare wheel (6), and wherein a sliding surface (30) is formed on the body of the vehicle (1) opposite a downward sloping front end (23) of the cover (5), and when the fastening (22, 24) is released as a result of a sufficiently strong force acting in the direction of the sliding surface (30), the front end (23) of the cover (5) slides downwards along the said surface, characterised in that
one fastening (22) of the cover (5, 47) is by means of a lock (8) and spring (10), wherein a top end (15) of a bolt (12) fastened to the cover (5, 47) engages in an opening (9) formed by the spring (10),
the opening (9) of the spring (10) can be enlarged by a sheathed cable or the like (18) and an actuating element (19) in order to release the bolt,
at least one securing lug (28) engages in the opposite direction in an opening (29) formed in the body (30) and thus additionally prevents the cover (5) from sliding forwards,
another fastening is by means of at least one slotted guide (48) fastened to the body (53, 54) of the vehicle (1), wherein a pin (49) is guided in the respective slotted guide (48),
the cover (47), when unlocked from the fastening (22), first rotates downwards around the top point of the slotted guide (48) as far as a stop (46, 61) and
the cover (47) and spare wheel (6) can then be pulled out backwards along the slotted guide (48) and beyond the surface (51) of the vehicle.

2. An arrangement of a spare wheel according to claim 1, characterised in that the pin (49) is so secured in the slotted guide (48) that if a suitably strong force acts in the direction of the sliding surface (30) the pin (49) slides out of the slotted guide (48).

3. An arrangement of a spare wheel (6) on a motor vehicle (1) underneath the bottom (3) of a luggage boot, comprising a device (5) in which the spare wheel (6) is held, the device (5) being inclined obliquely forward and downward, the device (5) being attached by at least two fastenings (22; 24) to the body of the vehicle (1) so that when the force exerted on the rear (51) of the vehicle exceeds a certain value the device (5) comes loose from the fastenings (22; 24) and moves downwards and forwards into a free space between a vehicle bottom (3) and a road, wherein the device (5) has a dish-shaped cover (5) closed towards the road and open towards the vehicle bottom (3) for holding the spare wheel (6), and wherein a sliding surface (30) is formed on the body of the vehicle (1) opposite a downward sloping front end (23) of the cover (5), and when the fastening (22, 24) is released as a result of a sufficiently high force acting in the direction of the sliding surface (30), the front end (23) of the cover (5) slides downwards along the said surface, characterised in that
one fastening (22) of the cover (5, 47) is by means of a lock (8) and spring (10), wherein a top end (15) of a bolt (12) fastened to the cover (5, 47) engages in an opening (9) formed by the spring (10),
the opening (9) of the spring (10) can be enlarged by a sheathed cable or the like (18) and an actuating element (19) in order to release the bolt,
at least one securing lug (28) engages in the opposite direction in an opening (29) formed in the body (30) and thus additionally prevents the cover (5) from sliding forwards, and
the other fastening (24) comprises at least one hook (25, 26) formed on the cover (5) and suspended from a pivot (27) disposed on the vehicle body, the hook (25, 26) being open towards the rear (51) of the vehicle.

4. An arrangement of a spare wheel according to any of the preceding claims, characterised in that the cover (5, 47) has additional stowage space (32, 33) alongside the space for the spare wheel (6).

5. An arrangement of a spare wheel according to any of the preceding claims, characterised in that the cover (5, 47) is aerodynamically adapted to the vehicle bottom and is disposed behind a rear axle (4) and in front of a boundary (51) of the vehicle.

6. An arrangement of a spare wheel according to any of the preceding claims, characterised in that the cover (5, 47) is disposed between the two rear wheels (56) of the vehicle.

## Revendications

1. Logement de roue de secours (6) de véhicule automobile (1) sous le fond (3) du coffre, comprenant :
- une installation (5) tenant la roue de secours (6),
- l'installation (5) étant inclinée vers l'avant et vers le bas,
- l'installation (5) étant fixée à la carrosserie du véhicule automobile (1) par au moins deux moyens de fixation (22, 24) pour que l'installation (5) se détache des moyens de fixation (22, 24) pour une force agissant sur l'arrière du véhicule (5) et dépassant une valeur prédéterminée, et se déplaçant vers le bas et vers l'avant dans l'espace libre entre le fond (3) du véhicule et la chaussée,
- l'installation (5) recevant la roue de secours (6) étant un couvercle (5) en forme de coupelle, fermé en direction de la chaussée et ouvert en direction du fond (3) du véhicule, et vis-à-vis de l'extrémité avant (23) inclinée en biais vers le bas, le moyen de recouvrement (5) est réalisé sous la forme d'une surface de glissement (30) de la carrosserie du véhicule (1) et,
- le long de l'action de la force élevée de manière correspondante, développée le long de l'extrémité avant (23) du moyen de recouvrement (5) après le desserrage du moyen de fixation (22, 24) à cause de la force élevée correspondante en direction de la surface de glissement (30), descend,
caractérisé en ce que
l'un des moyens de fixation (22) du moyen de recouvrement (5, 47) se fait par une serrure (8) avec un ressort (10), une ouverture (9) formée par le ressort (10) s'accrochant avec une extrémité supérieure (15) dans un goujon (12) fixé au couvercle (5, 47), et l'ouverture (9) du ressort (10) est reliée par un câble ou un moyen analogue (18) et un élément de manoeuvre (19) pour libérer le goujon (12) et,
- au moins une patte de sécurité (28) pénètre dans la direction opposée dans une ouverture (29) réalisée dans la carrosserie (30) et protégeant ainsi le moyen de recouvrement (5) en plus vis-à-vis de son glissement vers l'avant,
- un autre moyen de fixation se fait par au moins une courbe à coulisse (48) qui est fixée à la carrosserie (53, 54) du véhicule (1) pour que dans la courbe à coulisse respective (48), est guidé un tourillon de coulisse (49),
- le couvercle (47) en cas de déverrouillage se dégage du moyen de fixation (22) en descendant tout d'abord jusqu'à une butée (46, 61) à partir du point le plus haut de la courbe à coulisse (48), en tournant puis, en extrayant le couvercle (47) ensuite avec la roue de secours (6), le long de la courbe à coulisse (48), vers l'arrière, au-delà de la ligne (51) du véhicule.

2. Logement de roue de secours selon la revendication 1,
caractérisé en ce que
les tourillons à coulisse (49) sont tenus dans les courbes de coulisse (48) et les tourillons (49) glissent sous l'effet d'une force relativement importante en direction de la surface de glissement (30) en sortant de la courbe à coulisse (48).

3. Dispositif à roue de secours (5) formé d'un véhicule automobile (1) sous un fond de coffre (3), tenu par une installation (5) dans laquelle il y a la roue de secours (6), l'installation (5) étant inclinée vers l'avant et vers le bas, l'installation (5) est fixée par au moins deux moyens de fixation (22, 24) à la carrosserie du véhicule automobile (1), l'installation (5) se détache des moyens de fixation (22, 24) à partir d'une force prédéterminée agissant sur l'arrière (51) du véhicule et se déforme vers le bas et vers l'avant dans l'espace libre compris entre un fond (3) du véhicule et la chaussée,
l'installation (5) recevant la roue de secours (6) étant un couvercle (5) en forme de coupelle, fermé en direction de la chaussée mais ouvert vers le fond (3) du véhicule,
et vis-à-vis d'une extrémité (23) avant, inclinée en biais du moyen de recouvrement (5), on a une surface de glissement (30) sur la carrosserie du véhicule (1), le long de laquelle l'extrémité avant (23) du couvercle (5) peut descendre en glissant après l'ouverture du moyen de fixation (22, 24) sous l'effet d'une force d'intensité correspondante en direction de la surface de glissement (30),
caractérisé en ce que
une fixation (22) du couvercle (5, 47) se fait par une serrure (8) avec un ressort (10),
une ouverture (9) reçoit par accrochage l'extrémité supérieure (15) d'un goujon (12) fixé au couvercle (5, 47),
- l'ouverture (9) du ressort (10) est augmentée par un câble de traction ou un moyen analogue (18) et un élément de manoeuvre (19) pour libérer le goujon (12),
- au moins une patte de sécurité (28) pénètre dans la direction opposée dans une ouverture (29) réalisée dans la carrosserie (30) et bloque ainsi de façon complémentaire le couvercle (5) vis-à-vis de tout glissement,
- l'autre moyen de fixation (24) se composant d'au moins un crochet (25, 26) réalisé sur le couvercle (5) et qui est accroché à un axe de pivotement (27) prévu sur la carrosserie du véhicule,
- les crochets (25, 26) étant ouverts par rapport à l'arrière (51) du véhicule.

4. Logement de roue de secours selon l'une quelconque des revendications précédentes,
caractérisé en ce que
le recouvrement (5, 47) présente en plus du volume de la roue de secours (6), des volumes d'accumulation supplémentaires (32, 33).

5. Logement de roue de secours selon l'une quelconque des revendications précédentes,
caractérisé en ce que
le couvercle (5, 47) est adapté de manière aérodynamique au fond du réservoir, derrière un essieu arrière (4) et devant l'arrière (51) du véhicule.

6. Logement de roue de secours selon l'une quelconque des revendications précédentes,
caractérisé en ce que
le couvercle (5, 47) est prévu entre les deux roues arrière (56), du véhicule.
